# EUROPEAN PATENT APPLICATION

(11) **EP 1 009 165 A1**
(43) Date of publication of application: **14.06.2000**
(21) Application number: 99203788.7
(22) Date of filing: 12.11.1999
(51) Int. Cl.: H04N 7/16

(54) **Remote control for operating payment services and/or functions**

(30) Priority: 13.11.1998 NL 1010553
(71) Applicant: Video Jock C.V., 1400 AH Bussum (NL)
(72) Inventor: Kuylaars, Erik Gerardus Adrianus, 2275 AC Voorburg (NL)
(74) Representative: Jorritsma, Ruurd

(57) **Abstract**

Remote control (1), provided with keys (2) connected to coding means (3) which transmit a certain operating code by means of a transmitter (4), connected to the coding means (3), when one or more keys (2) are operated, characterised in that the remote control (1) is further provided with accounting means (5), connected to the coding means (3), the accounting means (5) being equipped to bar at least one predetermined operating code for transmission. Preferably, the barring can be cancelled for a specific period, said cancellation being registered in the accounting means (5). The invention also relates to a combination of a central administration system (10) and at least one remote control (1), the central administration system (10) being provided with at least one read/write device (11) for exchanging data with the remote control (1).

## Description

The present invention relates to a remote control, provided with keys connected to coding means which transmit a certain operating code by means of a transmitter (for example an infrared transmitter), connected to the coding means, when one or more keys are operated.

A remote control of this type is used, for example, for remote control of a television. The television is then provided with an infrared receiver which converts the codes received into specific operational activities, such as the selection of a specific television channel. Those skilled in the art are familiar with universal remote controls which are pre-programmed with operating codes for a multiplicity of makes and types of television, the user being able to enter a specific make or type of television, after which the remote control functions as a remote control belonging to that television.

With the known universal remote control it is not possible to charge a specific sum for performing a specific operating code without extensive facilities in the equipment that is being operated. If, for example, a TV is operated in order to view a TV programme on a pay-TV channel, such as in hotels or hospitals, both the cable network and all TVs have to be adapted or specially purchased for this purpose in order to make it possible for the TV programme to be viewed on the TV concerned and charged to the user concerned. The cable network must then, in particular, be suitable for two-way communication, the TV and remote control concerned must be adapted for two-way communication and the network must be controlled by a central computer unit.

The aim of the present invention is, therefore, to provide a remote control which in a simple, controllable and inexpensive manner provides a facility making it possible to operate functions of an associated piece of equipment for which a specific sum has to be payment.

Said aim is achieved by the remote control of the type defined in the preamble, characterised in that the remote control is further provided with accounting means, connected to the coding means, the accounting means being equipped to bar at least one predetermined operating code for transmission.

The remote control according to the present invention has the advantage that a multiplicity of pieces of equipment and functions for which payment has to be made can be operated by means of a remote control which is simple per se, without the equipment concerned having to be adapted. Users who do not wish to make use of payment services are given a remote control for which at least one operating code has been barred. Another user, who does wish to make use of specific payment services, such as viewing a pay-TV channel in a hotel, is given a remote control with which it is possible to tune to the channel concerned because the associated operating code has not been barred. The remote control also retains the facility for operating pieces of equipment and/or functions for which no payment has to be made.

In a preferred embodiment of the present invention the accounting means are further equipped to cancel the barring of the at least one operating code for a specific period, cancellation of the barring being recorded in the accounting means.

By this means it is possible to give all users the same remote control and to charge for any use of payment services afterwards.

In a preferred embodiment of the remote control according to the present invention the accounting means record a sum due associated with a specific cancellation. Preferably, a specific initial credit is recorded in the accounting means, which credit is reduced by a specific amount each time the at least one barring is cancelled.

By making a specific initial credit available, the remote control can be used immediately for operating payment services, such as viewing pay-TV. It is also possible, for example, to maintain accurate records of which barrings have been cancelled and when.

In a further embodiment of the present invention the remote control is further provided with a display screen on which, for example, the remaining credit can be displayed or instructions on the use of the remote control can be given.

In a preferred embodiment the remote control is further provided with transfer means for exchanging data between the accounting means and systems to be connected externally. Preferably, the transfer means operate by means of transfer of infrared signals.

The exchange of data can take place in two directions. Thus, for example, an identification number or room number and/or a specific initial credit can be transferred to the accounting means of the remote control and, conversely, the residual credit and/or data relating to the use of the cancellation of barrings can be read from the remote control.

In a further embodiment of the remote control according to the present invention the operating code which is transmitted contains a security coding. By means of a simple modification of the equipment to be operated, for example consisting in adding a control device, it is now possible to reserve operation of the equipment for the remote control which transmits the correct security code.

A second aspect of the present invention relates to a combination of a central administration system and at least one remote control according to one of Claims 6 to 8, characterised in that the central administration system is provided with at least one read/write device for exchanging data with the remote control. Preferably, the exchange of data takes place via infrared transfer.

The central administration system can be used for reading out the data which are stored in the accounting means of the remote control and for administrative processing of said data. The central administration system can also be used to transmit data to the remote control, such as identification number or room number and/or a specific initial credit. This system can be used, for example, in a hotel, the guest being given a remote control with a specific credit for payment services, such as pay-TV, on arrival and the remote control being read out again and a charge made for the credit used when the guest departs.

A third aspect of the present invention relates to a cable TV system, comprising at least one video recorder for playing video films, at least one modulator, connected to the video recorder, for modulating the signal originating from the video recorder to a specific channel, characterised in that a TV connected to the cable TV system can be tuned, with the aid of a remote control according to one of Claims 1 to 8, to the specific channel, the operating code of the remote control which is associated with said specific channel corresponding to the predetermined operating code to be barred.

By means of this cable TV system it is possible to charge the user for payment services, such as pay-TV, without extensive changes having to be made to an existing cable TV system or the TVs connected thereto. By this means it is very simple to make existing cable TV systems, such as are used in hotels or hospitals, suitable for pay-TV. The programmes for which payment has to be made can be transmitted normally on a few of the channels of the existing cable TV system. By barring the operating codes corresponding to these channels on the remote control according to the present invention, the TV connected to the cable TV system can then not be tuned to the channels concerned but can be tuned to the other channels. By operating a specific key the user indicates that he/she wishes to pay for a pay-TV channel. By this means barring of the operating code concerned is cancelled, as a result of which the user is able to tune to said channel.

The cable TV system can, of course, also be provided with receivers known per se (aerial, dish ...), by which means it is possible to view not only the video signals from the video recorders but also ordinary TV channels on the TV connected to the cable TV system.

Preferably, said cable TV system is combined with the abovementioned administration system. By this means a complete system is obtained with which pay-TV programmes can be made available to a cable network, can be viewed by a user who has a suitable remote control and can be billed by the central administration system.

The various aspects of the present application will be discussed in more detail below with reference to the appended drawings.
Fig. 1 shows a diagrammatic representation of the remote control according to the present invention;
Fig. 2 shows a diagrammatic representation of a combination of an administration system and two remote controls according to the present invention; and
Fig. 3 shows a diagrammatic representation of a cable TV system according to a further aspect of the present invention.

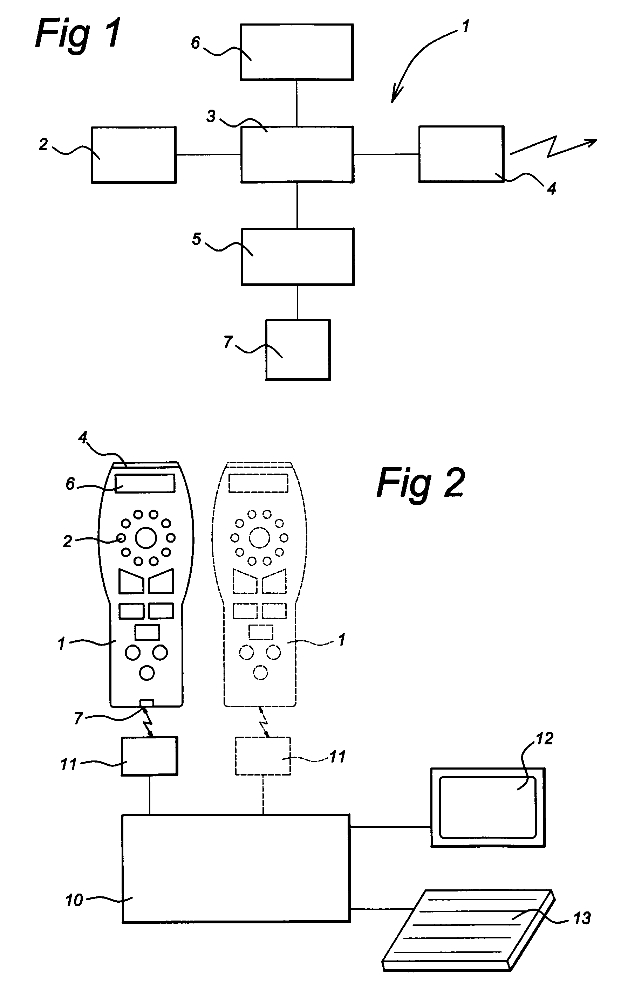

A diagrammatic representation of a remote control 1 according to the present invention is shown in Fig. 1. Just like the remote controls which are already known, the remote control 1 according to the present invention comprises a keypad 2, which is connected to coding means 3. The coding means 3 are connected to a transmitter 4, for example an infrared transmitter. When a key on the keypad 2 is pressed, the coding means 3 generate an associated operating code, which is modulated and transmitted by the transmitter 4. The equipment to be operated comprises a receiver which receives the modulated operating code, demodulates this and ensures that the function associated with the operating code is carried out. The coding means 3 can, for example, consist of computer and memory means known to those skilled in the art. So-called universal remote controls are already known in which the memory means contain the operating codes for a large number of pieces of equipment to be operated. The user can select the operating codes for a specific piece of equipment, as a result of which the relevant piece of equipment can be operated using the remote control.

The remote control 1 according to the present invention further comprises accounting means 5 which are connected to the coding means 3. The accounting means 5 are equipped to bar at least one predetermined operating code for transmission by the transmitter 4. Preferably, said barring can be cancelled for a certain period, said cancellation being recorded in the accounting means 5. The operating code to be barred can relate, for example, to a channel selection for a TV, programmes for which payment has to be made being transmitted on said channel. For this purpose the accounting means 5 can comprise computer and memory means known to those skilled in the art. As an alternative, the functionality of the accounting means 5 can be incorporated in the computer and memory means already present in the coding means 3.

The accounting means 5 are able to record not only the cancellation of a barring but, for example, also the amount payable for said specific cancellation, the time of cancellation or a specific initial credit. It is, of course, also possible to record other data, such as an identification number or room number, name, etc.

One application of the remote control 1 according to the present invention can be, for example, the selection of a pay-TV channel on a TV. Usually the channel selection for the pay-TV channel is barred and the user is thus not able to select the TV channel concerned. After pressing certain keys, barring of said channel is cancelled for a certain period, for example four hours. Within these four hours the user can also alternate between other channels and the barred channel. The cancellation is recorded in the accounting means 5 and it is also possible for a specific sum to be added to a debit balance or deducted from an existing credit balance.

In one embodiment of the remote control 1 according to the present invention the accounting means 5 are also equipped to combine the operating code with a security code. The equipment to be operated must then be modified so that said equipment responds only to transmitted operating codes which are combined with the correct security code. Each piece of equipment can then be operated only by the remote control programmed with the correct security code.

Although it is shown in Fig. 1 that the coding means 3 in the remote control 1 according to the present invention are directly connected to the transmitter 4, it will be clear to those skilled in the art that positioning the accounting means 5 between the coding means 3 and the transmitter 4 offers advantages. The functionality of the accounting means 5, in particular the barring of specific operating codes, can then easily be added to the remote control 1, without modification of the coding means 3.

In further embodiments of the remote control 1 according to the present invention, said remote control can further comprise a display screen 6 which is connected to the coding means 3. The display screen can, for example, serve to display data relating to the operating code, the recorded cancellations and the like or instructions for use of the remote control.

The remote control 1 according to the present invention can also be provided with transfer means 7 to allow the accounting means 5 to communicate with external equipment. Said transfer means 7 can be of simple construction in the form of an electrical connection or in the form of an infrared link.

According to a second aspect of the invention, such external equipment can be a central administration unit 10, as is shown in Fig. 2. The central administration unit 10 is to this end equipped with one or more read/write devices 11, which interact with the transfer means 7 of the remote control 1 to transfer data from the central administration unit 10 to the remote control 1 and vice versa. The read/write device 11 can also be equipped as a holder for the remote control 1. For operation of the central administration unit 10, the latter is provided with input and read means, such as display screen 12 and keypad 13, which are known to those skilled in the art.

The central administration unit 10 is equipped for exchanging data with the accounting means 5 of the remote control 1. Said data are, for example, an identification number or room number, a specific initial credit and, in the reverse direction, the residual credit and/or data relating to the use of barring cancellation.

The central administration unit 10 can, for example, be located at the reception desk of a hotel or hospital. On arrival, the guest is given a remote control with a specific credit for payment services, such as pay-TV, and when the guest departs the remote control is read out again and the guest is billed for the credit used.

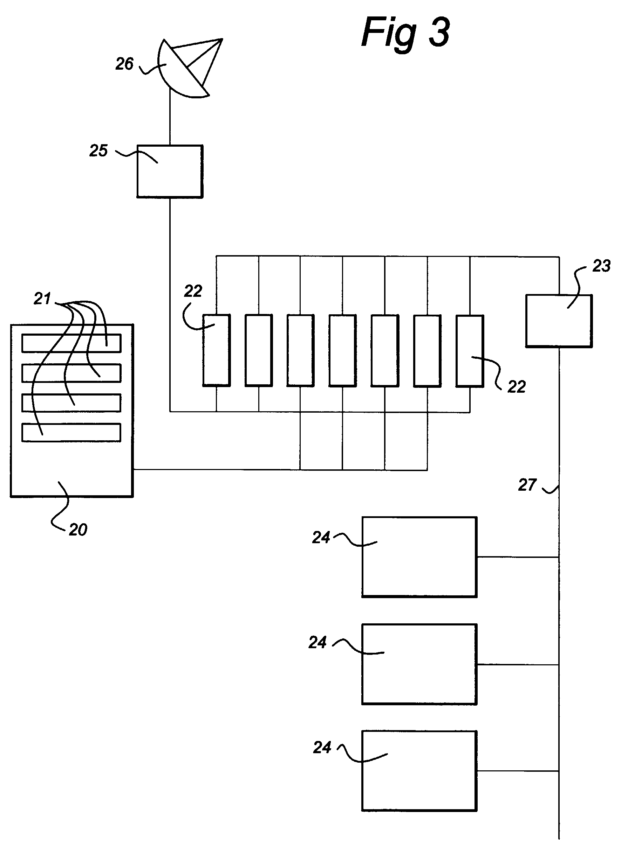

A third aspect of the present invention relates to a cable TV network 15, as shown in Fig. 3, which is suitable for transmitting pay-TV programmes on channels which, on payment, can be selected by the remote control 1. Cable TV networks 15, which, for example, are used in hotels or hospitals, comprise an aerial 26 (for example a dish aerial) which is connected to a receiver 25. Said receiver 25 demodulates the desired transmitter signals and feeds these to various modulators 22 which modulate each signal on a different channel. The modulators 22 are connected to an aerial amplifier 23 which amplifies the signals and distributes them via a cable network 27. TVs 24 can be connected to the cable network 27 and guests in the hotel can tune to the various transmitters.

As an additional service, a number of channels of the cable TV network 15 are often used to transmit other programmes as well, such as films. For this purpose the cable TV network 15 must be provided with a number of video recorders 21, which are controlled by an automatic timer 20. The video signals originating from the video recorders 21 are fed to further modulators 22, by which means the video signals on a specific channel can be seen on the TVs 24 connected to the cable network 27. The timer 20 ensures that the video tape placed in each video recorder 21 is started at specific times and rewound again at the end.

In the case of the cable TV system 15 according to the present invention, a TV 24 connected to the cable TV system 15 can be tuned to the specific channel with the aid of a remote control 1 according to the present invention, the operating code from the remote control 1 which belongs to said specific channel corresponding to the predetermined operating code to be barred. This can be implemented by tuning the modulators 22 which are connected to the video recorders 21 to channels for which the operating codes corresponding to said channels are usually barred in the remote control 1.

By this means it is possible to allow a guest to pay to view a pay-TV channel without extensive and expensive modifications to an existing cable TV network 15 being required.

The remote control according to the present invention has been discussed above in particular with reference to pay-TV systems. It will be clear to those skilled in the art that the remote control according to the present application is also capable of remote control of other equipment and/or functions, for which payment may or may not have to be made, such as opening the door of a (hotel) room or indoor car park.

## Claims

1. Remote control, provided with keys connected to coding means which transmit a certain operating code by means of a transmitter, connected to the coding means, when one or more keys are operated, characterised in that the remote control (1) is further provided with accounting means (5), connected to the coding means (3), the accounting means (5) being equipped to bar at least one predetermined operating code for transmission.

2. Remote control according to Claim 1, characterised in that the accounting means (5) are further equipped to cancel the barring of the at least one operating code for a specific period, cancellation of the barring being recorded in the accounting means (5).

3. Remote control according to Claim 1 or 2, characterised in that the accounting means (5) record a sum due associated with a specific cancellation.

4. Remote control according to Claim 1, 2 or 3, characterised in that a specific initial credit is recorded in the accounting means (5), which initial credit is reduced by a specific amount for each cancellation of the barring.

5. Remote control according to one of Claims 1 to 4, characterised in that the remote control (1) is further provided with a display screen (6).

6. Remote control according to one of Claims 1 to 5, characterised in that the remote control (1) is further provided with transfer means (7) for exchanging data between the accounting means (5) and systems to be connected externally.

7. Remote control according to Claim 6, characterised in that the transfer means (7) operate by means of transfer of infrared signals.

8. Remote control according to one of Claims 1 to 7, characterised in that the operating code contains a security coding.

9. Combination of a central administration system and at least one remote control according to one of Claims 6 to 8, characterised in that the central administration system (10) is provided with at least one read/write device (11) for exchanging data with the at least one remote control (1).

10. Combination according to Claim 9, characterised in that the exchange of data takes place via IR transfer.

11. Cable TV system, comprising at least one video recorder, for playing video films, and at least one modulator, connected to the video recorder, for modulating the signal originating from the video recorder to a specific channel, characterised in that a TV (24) connected to the cable TV system (15) can be tuned, with the aid of a remote control (1) according to one of Claims 1 to 8, to the specific channel, the operating code of the remote control (1) which is associated with said specific channel corresponding to the predetermined operating code to be barred.
